# EUROPEAN PATENT SPECIFICATION

(11) **EP 3 213 124 B1**
(45) Date of publication and mention of the grant of the patent: **28.08.2019**
(21) Application number: 15802217.8
(22) Date of filing: 23.10.2015
(51) Int. Cl.: G01V 9/02, E02D 1/02, G01N 25/40

(54) **METHOD, SYSTEM AND PREFABRICATED MULTI-SENSOR INTEGRATED CABLE FOR DETECTION AND MONITORING OF A FLUID FLOW, IN PARTICULAR OF A FLUID FLOW IN FILTRATION PROCESSES, ESPECIALLY OF LEAKAGE IN CONSTRUCTIONS AND/OR IN GROUND**
VERFAHREN, SYSTEM UND VORGEFERTIGTES INTEGRIERTES MULTISENSORKABEL ZUR ERKENNUNG UND ÜBERWACHUNG EINES FLÜSSIGKEITSFLUSSES, INSBESONDERE EINES FLÜSSIGKEITSFLUSSES IN FILTRATIONSVERFAHREN, INSBESONDERE VON LECKAGEN BEI BAUWERKEN UND/ODER IM BODEN
PROCÉDÉ, SYSTÈME ET CÂBLE PRÉFABRIQUÉ INTÉGRÉS AVEC DES CAPTEURS MULTIPLES POUR LA DÉTECTION ET LA SURVEILLANCE D'UN ÉCOULEMENT DE FLUIDE, EN PARTICULIER D'UN ÉCOULEMENT DE FLUIDE DANS DES PROCÉDÉS DE FILTRATION, PLUS PARTICULIÈREMENT DES FUITES DANS DES CONSTRUCTIONS ET/OU DES FUITES DANS LE SOL

(30) Priority: 31.10.2014 PL 40996314; 31.10.2014 PL 40996414
(43) Date of publication of application: 06.09.2017
(73) Proprietor: Neostrain spolka z ograniczona odpowiedzialnoscia, 30-702 Krakow (PL)
(72) Inventor: RADZICKI, Krzysztof, 30-836 Kraków (PL); STOLINSKI, Marek, 31-867 Kraków (PL)
(74) Representative: Karczmitowicz, Teresa Ewa
(86) International application number: PCT/PL2015/000170
(87) International publication number: WO 2016/068736

(56) References cited:
- WO-A1-2014/056541
- US-A- 4 932 250
- US-A1- 2006 010 973
- Erik Peters: "GeoBeads Multi-Parameter Network for Levee Monitoring", UrbanFlood Workshop Amsterdam 2010, 1 November 2010 (2010-11-01), XP055251591, Amsterdam Retrieved from the Internet: URL:http://www.urbanflood.eu/Documents/p5_ urbanflood_2010.pdf [retrieved on 2016-02-19]

## Description

The invention relates to a method of thermal detecting and monitoring the filtration and erosion processes in ground, especially in ground being foundation for objects of building and hydraulic engineering. The invention also relates to a system and a prefabricated multi-sensor integrated cable for carrying out the method. The invented method is based on simultaneous use of heat sources and temperature sensors, and can be implemented without performing deep excavations.

In the prior art there are described many methods for the detection and analysis of the filtration and erosion processes, including methods for detecting leaks in building and hydraulic engineering. In particular the ground hydraulic structures used for water damming are subject to the processes of filtration during operation due to the permeability of the soil material they are built of. Uncontrolled filtration, especially leakage, and its destructive effects, also in the form of erosion process which can wash away soil particles, is one of the main causes of accidents of earth dams and levees resulting in very high economic and social losses. Detection and analysis of filtration processes in the ground and the body of the dam or the flood bank is a prerequisite for proper evaluation of the state of these structures and making decisions for their maintenance, repairs, and modernization.

The thermal monitoring method using heat sources and temperature sensors is based on a relationship between a transport of heat and a transport of water in the ground. This interdependence is described by the equation of conservation of energy. If there is no filtration, a relatively slow process of thermal conduction is responsible for distribution of heat in the ground. However, the mere change of soil moisture causes local changes in the speed of passage of the thermal front and disturbs the shape of the isotherms. In case of filtration, that is, of movement of the liquid, there is a significant increase of quantity and speed of heat transported together with the water mass into the soil medium. This is the so-called process of advection, dominant relative to the conduction process. Erosion processes affect speed and direction of filtration processes and consequently the field of temperature distribution. Analysis of temperature measurements carried out in a body of an object or in the ground allows for detection and collection of information about the geometry and parameters of both filtration and erosion process development. The thermal monitoring method is a recognized method of detection and analysis processes of filtration and erosion.

Methods for measuring temperature in the ground can be divided into three classes of measurements: spot, linear or quasi-linear. Spot measurement is performed using the individual sensors installed in the monitored object in significant distances from each other, which does not enable spatially continuous measurement. For example, spot metering is a measurement of temperature of water in a piezometer which is a tube installed in the ground and used to measure the water level. Measurements are taken at different depths in the piezometer. Such measurement may be implemented by individual temperature sensors installed permanently. Assuming an absence of convection in the piezometer, the temperature measured in water corresponds to the temperature of soil adjacent to the piezometer at given depth. Dense distribution of the individual sensors in the piezometer enables quasi-continuous measurement of temperature in vertical direction over its length.

German patent application DE4127646 A1 discloses a system of low-diameter tubes (hollow rods) beat down into the ground, with inserted a series of temperature sensors. Specific measurement probes can be used to determine individual thermal parameters. Each measurement probe can contain several sensors arranged in a row. The measurement probe can be heated using a heating wire. The hollow rod is made of metal, preferably steel, and has a heavy conical tip at the lower end. The outer diameter of the probe is less than the internal diameter of the cylindrical tube. A limitation of this method is that temperature is measured in only a single point at a time.

In turn, a method of linear temperature measurement is carried out using an optical waveguide and is called a distributed temperature sensing. The measurement involves placing the optical fiber in the ground and introducing the laser pulses into the fiber. When light is passing through the fiber core, photons are scattered on its molecules. A part of scattered photons returns backwards to the point of the impulse input. Based on spectral analysis of backscatter, and compared with the spectrum of light introduced into the optical fiber, the temperature of the fiber at the site of scattering is determined. This place is localized by calculations using timing of the light signal. As a result of measurement by the fiber optic method, temperature is measured over the entire length of the fiber, consisting of the average values of temperature of subsequent optical fiber segments. The spatial resolution of measurement, which depends on many factors and in particular on the test equipment, determines the lengths of said optical fiber segments. In hydraulic engineering, the standard distance taken as sufficient for acceptable spatial resolution in fiber optic measurements of temperature is 1 m.

The methods of quasi-linear heat measurement are based on the so-called integrated or sensory cables in which individual sensors are built into the measurement cable together with power and communication systems. The sensors are arranged so densely that one can speak of a quasi-continuous measurement of temperature in space, which enables detection and analysis of filtration, and indirectly of the erosion processes. An example of such an integrated cable is GeoBeads by Alert Solutions, dedicated to hydro-engineering and geotechnical applications, or linear heat detector system LISTEC by LIST GmbH, which, however, is used to detect fires.

In both linear and quasi-linear method of temperature measuring installation of the cable in new buildings is relatively cheap and does not pose serious engineering problems. In contrast, cable installation in existing buildings is costly or impossible because of the security risks posed by deep excavations.

The thermal monitoring method includes two basic types: a passive method and an active method. Passive method consists in measuring and analyzing the object's natural temperature. This method requires small amounts of energy and therefore measurement can be executed even on a portable apparatus. For passive monitoring, the temperature at the measuring point is determined mainly by external thermal stresses, and hence contains information about the medium through which the signal reaches the point of measurement. In the active method, in addition to the temperature sensor, a heat generator is introduced into the ground which heats the soil in the surroundings of the temperature sensor. A change in humidity or in filtration velocity around the heat generator causes changes in speed of heat transport from the heat generator into the ground. Measurements of soil temperature with the temperature sensor located in the zone of influence of the heat generator and subsequent analysis allows to observe the impact of changes in the soil moisture and filtration velocity on a temperature change. Analysis of data obtained from the active thermal monitoring allows to detect changes in speed of filtration and detection of leaks.

An active method is used inter alia in the system of low-diameter tubes beat down into the soil which is the subject of German patent document DE4127646 A1 mentioned above. In case of optical fibers an active method is applied by heating the fiber optic cable using a heating cable with electric current generating heat according to the Joule's law. The heat generating cable can be placed together with the optical fiber in the same cable, or it can be installed adjacent to the fiber cable, in parallel, so that the heating effect was apparent in temperature measurements performed with use of the optical fiber.

Another German patent document DE10149024 A1 discloses a method for determining the physical values of ground water by introduction of an aqueous, chemical or physical marking solution with different conductivity into the ground water in area surrounding a probe placed in the ground water. The marked water moves with the flow of the ground water and is measured using electrical sensors arranged in the probe. The probe has a hollow cylindrical space containing chemically or physically marked aqueous solution that enters the ground water via tracer openings in the probe wall. The concentration, spatial distribution and physical and thermal behavior of the ground water is measured using electrical and thermal sensors.

The invention CN102721722 A relates to an in-situ thermal response testing device of the stratified thermal properties of the underground rock and soil. A U-shaped pipe is buried and an optical fiber temperature sensor is inserted into two branch pipes of the U-shaped pipe which is connected with an inlet and outlet of a circulating water pipeline of a ground testing device. Water temperatures in the two branch pipes, in different depth layers are respectively measured, the power of a heater is kept constant, and measured data of the water temperatures and the flow rates of circulating water in the two branch pipes of the U-shaped pipe in different depth layers at different times, as well as the corresponding heating power of the heater is recorded, so that a heat conduction coefficient, volume specific heat and a drilling thermal resistance value of soil in each layer can be obtained. Warmed water is a source of heat introduced into the ground.

According to Korean patent KR101240542 B1 a simultaneous measurement device for an underground water surface and the surrounding temperature distribution are provided to simultaneously check the water level of underground water surfaces contained in multiple aquifers and the ground subsidence or state in underground. A switch control device is formed on the side of a multi-sensor monitoring device. A cable connecting component is connected with the switch control device. A cable connects multiple temperature sensors and one water pressure sensor to the lower part of the cable connecting component to allow three-dimensional temperature monitoring. Here the ground is not artificially heated.

Opposite to the above described methods with and without heating the ground, Japanese patent document JP2004257745 A discloses a method of determining the flow direction and speed of the underground water by using the ground freezing technology. A boring hole for ground freezing is dug in the ground, and a frozen duct is installed in the hole. A plurality of temperature measuring holes are dug in the ground in a state of surrounding the frozen duct at almost equal distances from the frozen duct, and a plurality of temperature sensors are respectively mounted in the depth direction of each measuring hole. The ground is cooled and frozen through the frozen duct, and the change of the ground temperature is measured by the temperature sensor in each temperature measuring hole with time. The distribution of temperatures in the depth direction of the temperature measuring holes at the same time is determined. The flow speed of the underground water is relatively high at a measuring point where a temperature lowering degree is small by every depth. The direction of the measuring point of highest temperature lowering degree by every depth with respect to the frozen duct as a center is determined as the flow direction of the underground water.

Another Japanese patent document JPH11142281 A: describes a ground water measuring instrument which comprises a sensor cable structured by integrating at least one optical fiber and two heating metal wires adjacently with insulating resin so that the metal wires extend in parallel at intervals with the optical fiber, a current-feeding device setting a plurality of kinds of applied voltage, and a temperature distribution measuring instrument which measures the temperature distribution of the optical fiber along its length. The sensor cable is laid under the ground, the temperature distribution along the length of the optical fiber is measured while the metal wires are energized and heated, and the water content around the sensor cable and its flow velocity are determined.

Also in Japanese patent document JPH06214045 A a fluid flow sensor has a lengthy structure in which an optical fiber and a heating wire are covered with a heat resisting electric insulating material and integrated. This fluid flow sensor is set in the ground, a current is carried to the heating wire to generate heat, and the temperature distribution laid along the optical fiber is measured, whereby underground water level or flow is investigated. Further, the fluid flow sensor is inserted into a boring in which underground water is present, the current is fed to the heating wire to generate heat while measuring the temperature distribution laid along the optical fiber, and the magnitude of the flow of underground water is investigated by the change on standing of temperature distribution.

Two Korean patents KR100997157 B1 and KR100997162 B1 disclose a method and a device for measuring underground heat conductivity with use of an underground heat exchanger. According to the first one of these patents, the fluid filled in this underground heat exchanger is heated using a heating cable inserted into the device and then heating is stopped. The temperature change is continuously measured using an optical fiber sensor inserted into the underground heat exchanger. According to the second patent, a device for measuring underground heat conductivity comprises a multicable, an optical fiber sensor thermoscope, and a heating cable temperature controller. The multi cable has a heating cable and an optical fiber sensor. The heating cable is installed in a bore hole. The optical fiber sensor measures the temperature of underground. The optical fiber sensor thermoscope processes the temperature information. The heating cable temperature controller controls the temperature of the heating cable.

The invention described in Korean patent KR101431120 B1 relates to a linearly arranged wave height and seafloor water temperature measuring device installed in the seafloor of a measuring target area and connected to a control station on the ground, comprising multiple sensing modules arranged at regular intervals; a cable housing connected to a control station to control the multiple sensing modules with each other; and a signal line wired inside the sensing module and the cable housing. A pressure sensor and a water temperature sensor for measuring a pressure and a water temperature corresponding to the arranged area are installed inside the sensing module. Accordingly, the sensing module adopts sensors for respectively sensing a water pressure and a water temperature, so a change in horizontal space of a wave height and a seafloor water temperature in the corresponding area of the sea can be analyzed based on the installation location of each sensing module and information sensed from each sensing module.

Another Korean patent KR101182414 B1 proposes a landslide estimating method using temperature monitoring to warn of landslide by sensing flow of underground water, a saturation process, and minute vibration of a slope surface. An exploratory hole is formed on the ground, and a multipoint temperature cable is installed in this hole. The multi-point temperature cable is connected to a temperature monitoring device which monitors the temperature measured by the temperature sensors of the multi-point temperature cable, and compares it with a set of standard temperatures.

Chinese patent application CN102650606 A discloses an optical sensing method and detection device which comprises a medium interface sensor, a ground survey instrument and an armored optic/electric composite cable. The medium interface sensor comprises serially connected sensing basic units comprising an electric heater and an optical fiber temperature measuring device. They are encapsulated integrally; one or two metal wires and one optical fiber are included in the optic/electric composite cable. The ground survey instrument comprises an optical fiber sensing demodulation instrument, a constant-current power supply and a computer. The constant-current power supply provides heating current to the electric heater in a square wave form. The optical fiber sensing demodulation instrument is used for reading the temperature value of the optical fiber temperature measuring device continuously, and the medium species and interface positions at the periphery of an electrical heating body are identified according to differences of characteristic parameters of temperature-time curves in different media.

Japanese patent document JPS59160788 A relates to a measurement of direction and velocity of flow of ground water at an observation well by providing a heater and three or more temperature sensors non-linearly on the same surface of surrounding water in the observation well about 50 cm in diameter and several tens of meters deep. A detecting section is fixed horizontally by a cable and immersed in ground water. A heater is provided at the center of the detecting section, and four temperature sensors are arranged at a distance of 90 degrees, and at equal distance from the heater in the same surface of surrounding water. Temperature information is frequency converted by an electronic circuit and inputted to a signal processing device on the ground. These are protected by a reticulated sensor protector. Temperature of ground water is raised by the heater, and temperature rise at points of specified distance is measured by the sensors.

All the above described methods are either passive using single temperature sensors, sensor cables or optical fibers, or they are active but using single sensors or optical fibers only. In consequence all known methods are limited in application or performance, or they are too expensive which is also a limiting factor.

International patent application WO2014O56541 A1 discloses a method for monitoring the thickness of soil between its surface and a device buried in it, possibly underwater. This device comprises at least one heat source. The method comprises steps of (i) measuring at least one temperature using at least one temperature sensing element located in the vicinity of the heat source(s), and (ii) calculating an estimated soil thickness using a pre-determined thermal distribution function which links measured temperatures and soil thickness. The invention concerns also an instrumented device and a system implementing the method.

American patent US4932250 A describes a thermocouple device comprising a base wire and a plurality of junctions spaced along this wire, each of said junctions being connected to a monitoring means which provides a visual indication of the temperature at each junction. A heating coil or energy absorbative material may be disposed along the length of the base wire to assist in detection of liquid flow, ultrasonic flux or bubble presence.

Active methods of thermal monitoring that would be much cheaper and versatile than those using fiber optics are needed. Also less costly and safer in implementation linear or quasi-linear methods are expected in building and hydraulic engineering.

The claimed invention proposes an alternative method of active thermal detection and thermal monitoring of filtration and erosion processes in the ground. This invention enables quasi-linear measurements that are possible without making deep excavations and without using expensive instrumentation necessary in fiber optic method. In particular an optical fiber head is very expensive and susceptible to external uncontrolled factors easily disturbing the field measurements. The proposed method is thus safer, cheaper and more versatile, allows to receive more complete and more reliable data also in an existing large hydraulic structures such as dams, where large earthworks are excluded due to safety reasons.

Disclosed is a method for detection and monitoring of fluid flow according to claim 1.

The heat generator can be integral with the prefabricated multi-sensor integrated cable, preferably the heat generator is fastened to the outside of the cable tube. In a very convenient embodiment the heat generator is secured inside the cable tube.

However, in the other regime of this method the heat generator is introduced into monitored environment in a pre-set distance from the prefabricated multi-sensor integrated cable. In this case a water flow dynamics shown by increasing and decreasing temperature can be measured and profiled in three dimensions with linear or planar setup of temperature detectors.

According to claimed method power and time of heating by the heat generator is controlled by the control and recording unit. In a case of lack of water flow in monitored environment power of the heat generator is set to cause measurable increase of temperature measured by the temperature sensors comprised in the prefabricated multi-sensor integrated cable.

Optionally power and/or time of heating by the heat generator is equal to zero.

For most applications a distance between adjacent temperature sensors in the prefabricated multi-sensor integrated cable is set to ensure linearity of temperature measurements, preferably said distance is less than 2 m, more preferably it is between 0.1 m and 1 m.

According to particular needs the heat generator is a linear heater, e.g. a heating wire or alternatively a set of separate point heaters connected to the power line. Both the heating wire and the series of separate heaters connected to the power line can be comprised in a single prefabricated multi-sensor integrated cable if different measurement procedures are planned for the same measuring setup, e.g. spot measurements along a levee and quasi-linear readings in vertical direction.

Usually the prefabricated multi-sensor integrated cable is placed in a horizontal, inclined or vertical hole made in monitored environment. Preferably the temperature sensors are placed at a depth from 0.1 m to 15 m below the surface of monitored environment. The hole can be filled with non-permeable material, preferably bentonite.

A system for detection and monitoring of a fluid flow is disclosed according to claim 9.

This system is also characterized in that the heat generator is integral with the prefabricated multi-sensor integrated cable, preferably the heat generator is fastened to the outside of the cable tube, more preferably the heat generator is secured inside the cable tube.

In another embodiment of the system the heat generator is separate from the prefabricated multi-sensor integrated cable.

The heat generator is a linear heater, e.g. a heating wire or a set of separate point heaters connected to the power line, or both.

The prefabricated multi-sensor integrated cable is connected to the control and recording unit wirelessly or through a communication and supply cable.

A prefabricated multi-sensor integrated cable is disclosed according to claim 14.

Proposed method system, and a prefabricated multi-sensor integrated cable can be applied in building engineering, hydro-engineering, and/or geotechnology.

The originality of claimed invention consists in that the prefabricated multi-sensor integrated cable is equipped with one or more heat generators, in addition to temperature sensors. This creates a possibility of heating an immediate environment of the medium in which the each of the temperature sensors is placed, for a set period of time and with a set power, and simultaneous measuring the temperature of this medium at fixed intervals. The heat generator may be a resistance wire, in which heat is generated in accordance to the Joule's law. Another solution is to use a series of point heat sources located in the vicinity of the temperature sensors.

In a case where linear heat generator or point heat generators are installed outside the casing of the prefabricated multi-sensor integrated cable, a distance between them must be adapted to the amount or power of generated heat so that the heat generated effects on the temperature increment of the prefabricated multi-sensor integrated cable in the absence of any liquid in its immediate vicinity.

Main advantage of the present invention is that it is not necessary to use fiber optics for its implementation. The measuring head for measuring temperature with the optical fiber is expensive which is a strongly limiting factor. Another advantage is a new solution for a multi-sensor cable which now also includes the generator or generators of heat.

The proposed prefabricated multi-sensor integrated cable can be produced in any length. This makes a possibility to cut off from the spool the cable sections of lengths closely tailored to planned measurements. One or more sections can be used for measurements, according to the needs. Individual addressing of each temperature sensor allows to connect multiple sections of the integrated cable to one data bus. Thus it is possible to determine the thermal profile and further the ground filtration profile simultaneously on multiple depths without excavation. For this purpose, it is sufficient to make essentially narrow holes in the ground, sufficient to accommodate the integrated cable.

The distal end of each cable section is isolated or finished with suitable terminator, while the proximal end is fit with an appropriate connector, for example USB, as required.

The embodiments of the invention are shown in the drawings, which illustrate the linear set-up for detection and monitoring of filtration and erosion processes in the ground, wherein:
- Fig. 1 -: shows first embodiment with the point heat generators integrated with the prefabricated multi-sensor integrated cable;
- Fig. 2 -: shows second embodiment with the linear electric heat generator integrated with the prefabricated multi-sensor integrated cable;
- Fig. 3 -: shows third embodiment with the point heat generators placed outside of the prefabricated multi-sensor integrated cable;
- Fig. 4 -: shows fourth embodiment with the linear heat generator disposed outside of the prefabricated multi-sensor integrated cable;
- Fig. 5 -: shows fifth embodiment with three soil zones differing in humidity;
- Fig. 6 -: shows sixth embodiment with integrated cable segments installed in vertical holes;
- Fig. 7 -: shows seventh embodiment with the prefabricated multi-sensor integrated cables disposed in a water dam;
- Fig. 8 -: shows the top view of a distribution of integrated cables in the water dam shown in Fig. 7.

### Example 1

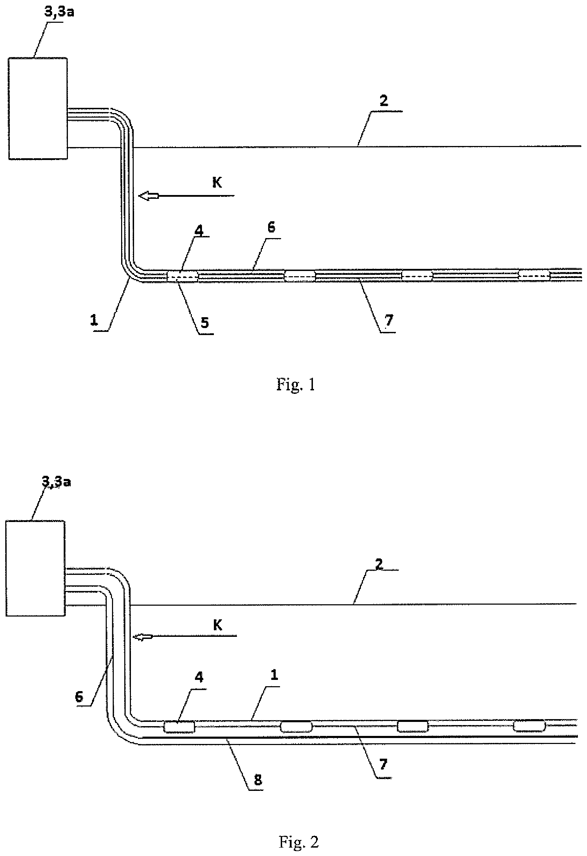

In this example of the method for detecting filtration and erosion processes in the ground according to the invention, a system shown in Fig. 1 is applied. The prefabricated multi-sensor integrated cable K is provided under the surface 2 of the ground, and connected to the control and recording unit 3. This control and recording unit is equipped with the means for acquisition, recording, processing and visualization of data and placed in the local collective housing containing the power source 3a. In the prefabricated multi-sensor integrated cable K the temperature sensors 4 are arranged at equal intervals of 0.5 m. Close to each temperature sensor a point heater 5 is installed. The temperature sensors 4 and the point heaters 5 are connected to the supply line 6 and the data line 7.

The data line 7 allows to control power and heating time of the point heaters 5. The power line 6 supplies power to the point heaters 5, which heat the integrated cable K, and this heats the surrounding soil. Time and heating power is controlled by the data line 6 connected to the control and recording unit 3. In this embodiment, all the point heaters 5 are switched on simultaneously, but it is possible to apply arbitrary algorithm of heating control.

The temperature sensors 4 measure the temperature of the ground every 1 minute. After switching off the soil heating the temperature sensors 4 continue to measure temperature of the ground during its chilling out. The measurement data is sent via the data line 7 to the control and recording unit 3 which is an industrial PC equipped with the data acquisition and data recording systems. Geographical position of each temperature sensor 4 is clearly defined during installation, enabling indication of its position among the other sensors and in space, and consequently enabling location of any filtration process. Different levels of humidity and appearance of the liquid flow and change of the filtration velocity around the prefabricated multi-sensor integrated cable K along its length, and in its different areas, cause changes in the amount and the transport speed of the heat transferred from individual point heaters 5 through the prefabricated multi-sensor integrated cable K into the ground. Consequently different values of temperature increments are measured at the same time by the temperature sensors 4.

The resultant data set is analyzed with commonly available methods of analysis to detect the characteristics of temperature variations in the cycle of heating and cooling the soil to determine the locations of the maximum differences for determining the largest zones of interaction of water and its flow.

Application of these methods in combination with the above-described method of heating and cooling the ground according to the invention allows for the detection of leaks and their kinetics, and the analysis of changes in humidity and the filtration velocity in the ground.

In particular, changes in the temperature measured by each temperature sensor 4, and/or the curve of the temperature measurement in time, induced by the heat produced by the point heater 5 installed near the integrated cable or in this cable, are analyzed. By this analysis, it is possible to obtain qualitative information or after appropriate system calibration, quantitative, relating to changes in humidity and/or liquid flow in the medium around the prefabricated multi-sensor integrated cable 1, which affect the speed and volume of the heat flow from the point heater 5 towards the temperature sensor 4.

### Example 2

Another version of the invented system is shown in Fig. 2. This system is analogous to that described in Example 1 except that instead of point heaters 5 a linear heat generator in the form of a heating cable 8 heated electrically is mounted in the prefabricated multi-sensor integrated cable K. The heating control is carried out directly from the control and recording unit 3.

### Example 3

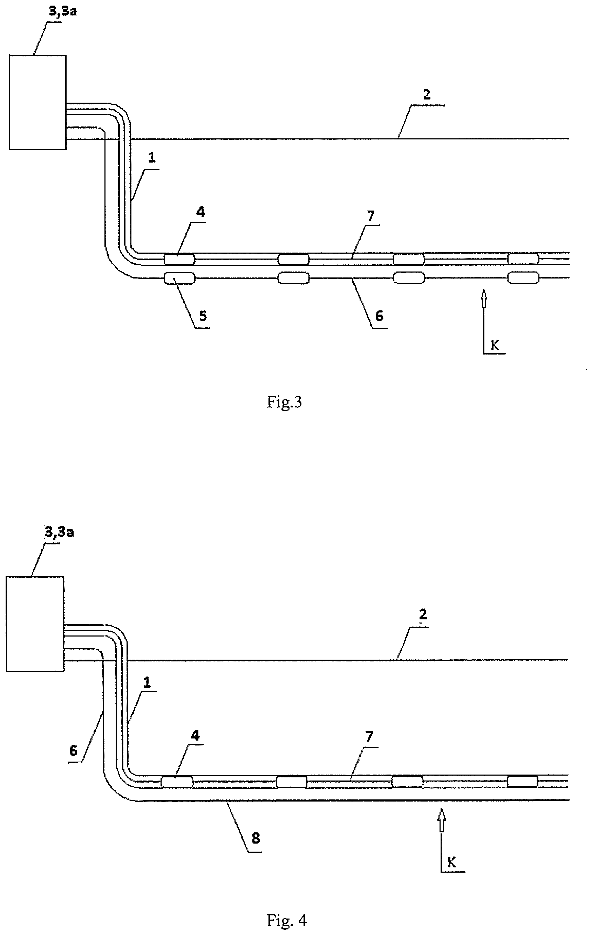

Still another embodiment of the system according to the invention is shown in Fig. 3. It is also a system analogous to that described in Example 1 except that the point heaters 5 are not integrated with the temperature sensors 4, but are located at a short distance from prefabricated multi-sensor integrated cable K. The point heaters 5 are connected to the power line 6 and the control of heating is carried out directly to the control and recording unit 3.

### Example 4

Yet another version of the proposed system is shown in Fig. 4. In the system analogous to that described in Example 3, the point heaters 5 are replaced by a linear heater in the form of the heating wire 8.

### Example 5

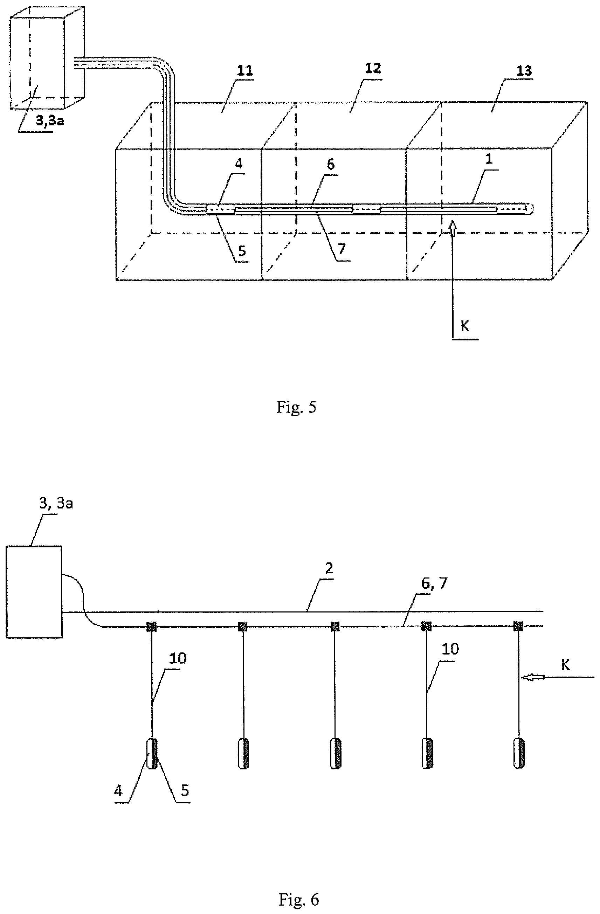

An exemplary method for detecting erosion and filtration processes in the ground according to the invention uses a system shown in Fig. 5. In the laboratory conditions, three trays 11, 12, 13 are filled with screened sand with the grains homogenous in size but with different levels of humidity. The prefabricated multi-sensor integrated cable K is placed in the sand as in example 1. The temperature sensors 4 are integrated with the point heaters 5 in the prefabricated multi-sensor integrated cable K and are arranged at equal intervals of 1.0 m. The temperature sensors 4 and the point heaters 5 are connected to the supply line 6 and the data line 7 comprised in the prefabricated multi-sensor integrated cable K.

The prefabricated multi-sensor integrated cable 1 is distributed in trays 11, 12 and 13, so that in each tray a single temperature sensor 4 assembled with one point heater 5 is placed. In this way, each temperature sensor 4 is related to a medium with defined level of humidity. The first tray 11 was filled with dry sand with a moisture content of 2%; the second tray 12 was filled with sand with a moisture content of 31%; and the third tray 13 was filled with sand with a moisture content of 63%. Using the power line 6 the point heaters 5 warmed the ground. Time and heating power were controlled via the data line 7 connected to the control and recording unit 3. In this embodiment all point heaters 5 were turned on simultaneously.

At the same time the temperature sensors 4 measured the temperature of the test zones in one-minute intervals. After switching off the point heaters 5 the temperature sensors 4 still measured the ground temperature while this has been chilling out. All measured data were transmitted via the data line 7 to the control and recording unit 3 equipped with a data acquisition system, where they were recorded. Each temperature sensor 4 has an individual address, enabling an indication of its position among the other sensors and in space. Measurements lasted for 12 hours. During the first four hours the point heaters 5 were heating the medium with a power of 3W. The next eight hours was a phase of cooling of the test zone. The temperatures measured by the temperature sensors 4 were recorded continuously throughout the whole measuring procedure. The temperature readings were done in one-minute intervals.

The test results are summarized in Table 1 of maximum temperature increments obtained for each sensor during heating of the sand for the different degrees of humidity.

**Table 1. Maximum temperature increments obtained in the experimental set-up.**

| Zone no. | Humidity [%] | Max. temperature increment ΔT [°C] |
|---|---|---|
| 1 | 2 | 26,23 |
| 2 | 31 | 6,94 |
| 3 | 63 | 4,92 |

Comparison of humidity and maximum increments of temperature shows a clear decline in the value of temperature increment with increasing humidity of the ground.

### Example 6

Another embodiment of the invention shown in Fig. 6 consists in connecting the sections of the prefabricated multi-sensor integrated cable K to a common supply and communication bus. For simplicity each cable segment contains a single temperature sensor 4 integrated with the point heater 5. This solution has two main advantages. Firstly, it gives the possibility of carrying out measurements using active method by heating the soil medium with the point heaters 5 and measuring temperature changes in the ground with the temperature sensors 4. Secondly, it allows the soil temperature profiling virtually at any depth without excavation, because the excavation work is limited to making narrow holes in the ground, sufficient for insertion of the cable sections.

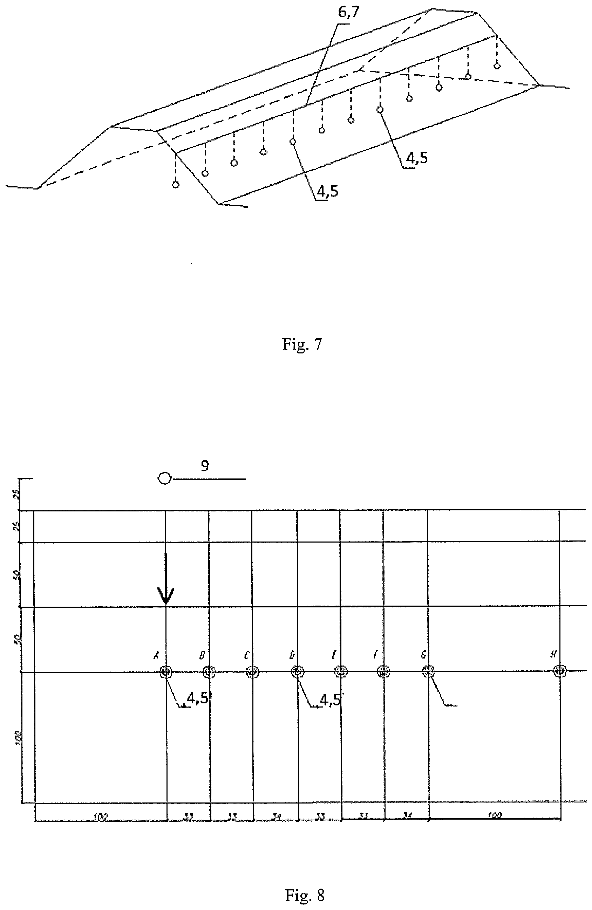

In this embodiment the active temperature sensors 4 were tested on a dam (Fig. 7), wherein the temperature sensors 4, identified with the letters A-H, were placed in one line on the earth bank at a depth of 1.70 m below its surface, in the hollow rods driven into the ground. At one side the hollow rod is flattened and a cutting edge is shaped to facilitate driving the empty rod into the ground. After inserting the sensor cables into the hollow rods void space was filled with bentonite. A distance between seven sensors (A-G) was 0.33 m, and a distance between the sensors G and H was 1.0 m (Fig. 8). Next, a leakage has been simulated by mounting an injection tube 9 at a distance of 1.50 m from the first (A) temperature sensor 4. Water was pumped for two hours at a flow rate of 10 l/min into the injection tube 9. Schematic distribution of active temperature sensors 4 integrated with the point heaters 5, the injection tube 9, and the indicative direction of the water flow (arrow) through the dam are shown in Fig. 8.

Then, in order to implement the active temperature measurement, each sensing element contained in a section of the prefabricated multi-sensor integrated cable K being a pair of two devices i.e. the temperature sensor 4 and the point heater 5 has been powered via common power supply and communication line 10. The point heaters 5 emitted heat for 1.5 hours with a power of 3 W each, all at once, heating the soil surrounding the temperature sensors 4 which measured the temperature in 1-minute intervals. After switching off the heating of the ground its temperature has been still measured during cooling. Geographical position of each temperature sensor 4 was specified during installation in the ground, which allows for indication of its position relative to other sensors as well as its position in space, also in relation to the site of the water injection. The water flow from the injection site reached some of the temperature sensors 4 and effected in reduction of their temperature increments generated by the point heaters 5.

Table 2 shows the measurements recorded by the temperature sensors 4 in the form of differences in the maximum temperature increments for each temperature sensor 4. The smallest temperature increase was observed in the sensor A located closest to the site of injection and indicating the greatest effect of injection of water. No effect of injected water was observed in the farthest sensor H, at a distance of 3.0 m from the sensor A, where the temperature increase was the largest.

**Table 2. Differences in maximum temperature increments for particular temperature sensors.**

| Cable/sensor | Max. temperature increment ΔT [°C] |
|---|---|
| A | 7,86 |
| B | 8,24 |
| C | 8,99 |
| D | 8,92 |
| E | 8,61 |
| F | 8,86 |
| G | 13,10 |
| H | 15,38 |

When the acquired data were analyzed in the control and recording system 3 it was found that the measurements are quasi-continuous along the investigated object for leaks greater than 10 I/min using the spacing between the sensing elements (temperature sensors 4) of at maximum 2.0 m, and optimally 1.0 m, since each of the sensors A to G ensures the detection of the injection, however, the lowest has been given by the G sensor.

### Reference numbers:

- K -: prefabricated multi-sensor integrated cable
- 1 -: cable tube
- 2 -: monitored environment
- 3 -: recording unit
- 3a -: power source
- 4 -: temperature sensor
- 5 -: heat generator - point heater
- 6 -: power line
- 7 -: data line
- 8 -: heat generator - linear heater
- 9 -: injection tube
- 10 -: common power supply and communication line
- 11 -: first tray
- 12 -: second tray
- 13 -: third tray

## Claims

1. A method of detection and monitoring of a fluid flow, in particular of a fluid flow in filtration processes, especially of leakage in constructions and/or in ground.
**characterized in that** a prefabricated multi-sensor integrated cable (K) comprising secured in a cable tube (1) a power line (6), a data line (7), a structure consisting of repeated sections;
wherein each section is individually addressed and controlled, and each section comprises:
a heat generator in the form of a point heater (5), a temperature sensor (4) connected to an A/D converter, an amplifier and a memory, and where the sections are connected to the power line and the data line, and where the prefabricated multi-sensor integrated cable is terminated with parallel, serial, USB, or other suitable connectors, and where said cable is introduced into monitored environment (2) and connected to a power source (3a) and to a control and recording unit (3) comprising a means for acquisition, recording, processing and visualization of measurement data, then the spatial position of each temperature sensor is determined in monitored environment, and the heat generator is supplied with a current controlled by the control and recording unit according to selected algorithm, then the temperature of monitored environment in function of space and time is measured with use of the temperature sensors, and produced data are transferred to the control and recording unit where these data are recorded and processed to obtain spatial and temporal distribution of temperature in monitored environment, and this distribution is visualized and/or stored in a memory unit of the control and recording unit.

2. The method according to claim 1, **characterized in that** the additional heat generator in the form of a set of point heaters (5) and/or a linear heater (8) is integral with the prefabricated multi-sensor integrated cable (K), preferably the additional heat generator is fastened to the outside of the cable tube (1).

3. The method according to claim 1, **characterized in that** the additional heat generator in the form of a set of point heaters (5) and/or a linear heater (8) is introduced into monitored environment (2) in a pre-set distance from the prefabricated multi-sensor integrated cable (K).

4. The method according to any of claims 1 to 3, **characterized in that** power and time of heating by the heat generator is controlled by the control and recording unit (3), and **in that** in case of lack of water flow in monitored environment (2) power of the heat generator is set to cause measurable increase of temperature measured by the temperature sensors (4) comprised in the prefabricated multi-sensor integrated cable (K).

5. The method according to any of claims 1 to 4, **characterized in that** power and/or time of heating by the heat generator is equal to zero.

6. The method according to any of claims 1 to 5, **characterized in that** a distance between the temperature sensors (4) in adjacent sections of the prefabricated multi-sensor integrated cable (K) is set to ensure linearity of temperature measurements.

7. The method according to claim 6, **characterized in that** the distance between the temperature sensors (4) in adjacent sections of the prefabricated multi-sensor integrated cable (K) is less than 2 m, preferably said distance is set between 0.1 m and 1 m.

8. The method according to any of claims 1 to 7, **characterized in that** the prefabricated multi-sensor integrated cable (K) is placed in a horizontal, inclined or vertical hole made in monitored environment (2), and **in that** the temperature sensors (4) comprised in the cable (K) sections are placed at a depth from 0.1 m to 15 m below the surface of monitored environment in the hollow rods driven into the ground, and also **in that** the holes in the hollow rods are filled with non-permeable material, preferably bentonite.

9. A system for detection and monitoring of a fluid flow, in particular of a fluid flow in filtration processes, especially of leakage in constructions and/or in the ground, for use in a method as described in claims 1 to 8,
**characterized in that** it comprises a prefabricated multi-sensor integrated cable (K) comprising secured in a cable tube (1) a power line (6), a data line (7), a structure consisting of repeated sections, wherein each section is individually addressed and controlled, and each section comprises: a heat generator in the form of a point heater (5), a temperature sensor (4) connected to an A/D converter, an amplifier and a memory, and where the sections are connected to the power line and the data line, and where the prefabricated multi-sensor integrated cable is terminated with parallel, serial, USB, or other suitable connector, and wherein the prefabricated multi-sensor integrated cable is connected to a power source (3a) and a control and recording unit (3) comprising a means for acquisition, recording, processing and visualization of measurement data.

10. The system according to claim 9, **characterized in that** the additional heat generator in the form of a set of point heaters (5) and/or a linear heater (8) is integral with the prefabricated multi-sensor integrated cable (K), preferably the additional heat generator is fastened to the outside of the cable tube (1).

11. The system according to claim 9, **characterized in that** the additional heat generator in the form of a set of point heaters (5) and/or a linear heater (8) is separate from the prefabricated multi-sensor integrated cable (K).

12. The system according to claim 10 or 11 **characterized in that** the heat generator is connected to the power line (6).

13. The system according to any of claims 9 to 12, **characterized in that** the prefabricated multi-sensor integrated cable (K) is connected to the control and recording unit (3) wirelessly or through a communication and supply cable.

14. The system of claim 9 - 13, comprising the prefabricated multi-sensor integrated cable (K) for use in the method as described in claims 1 to 8,
**characterized in that** said prefabricated multi-sensor integrated cable (K) comprises secured in a cable tube (1) a power line (6), a data line (7), a structure consisting of repeated sections, wherein each section is individually addressed and controlled, and each section comprises: a heat generator in the form of a point heater (5), a temperature sensor (4) connected to an A/D converter, an amplifier and a memory, and where the sections are connected to the power line and the data line, the temperature sensors being connected to the power line and the data line in parallel, and **in that** the prefabricated multi-sensor integrated cable is terminated with parallel, serial, USB, or other suitable connector.

15. Application of the method as defined in claims 1 to 8, and the system as defined in claims 9 to 14, in building engineering, hydro-engineering, and/or geotechnology.

## Patentansprüche

1. Verfahren zum Erkennen und Überwachen des Flüssigkeitsdurchflusses, insbesondere in Filtrationsprozessen, insbesondere für Leckagen in Konstruktionen und/oder Boden, **dadurch gekennzeichnet, dass** es ein vorgefertigtes, mit mehreren Sensoren bestücktes integriertes Kabel (K) aufweist, bestehend aus einer im Kabelrohr (1) geschützten Leitung (6), einer Datenleitung (7), einer Konstruktion aus gleichen Sektionen, wobei jede Sektion individuell adressierbar und kontrollierbar ist, wobei jede Sektion folgende Komponenten enthält: Wärmeerzeuge in Form eines Punktheizelements (5), Temperatursensor (4) verbunden mit A/D-Wandler, Verstärker und Speicher, wobei die Sektionen mit der Versorgungsleitung und Datenleitung verbunden sind und das vorgefertigte, mehrere Sensoren aufweisende integrierte Kabel an seinem Ende USB-Anschlüsse oder andere passende Anschlüsse aufweise und wobei das Kabel in die zu überwachende Umgebung (2) über eingeführt wird und an die Versorgungsquelle (3a) sowie die Steuer- und Erfassungseinheit (3) angeschlossen ist, welche Mittel zur Erfassung und Visualisierung von Messdaten enthält, wobei, die räumliche Lage jedes Temperatursensors in der zu überwachenden Umgebung bestimmt wird und der Wärmeerzeugerstrom durch die Steuer- und Erfassungseinheit gemäß dem gewählten Algorithmus gesteuert wird und die Temperatur der zu überwachenden Umgebung mittels Temperatursensoren gemessen wird und diese Daten erfasst und verarbeitet werden, um die räumliche und zeitliche Temperaturverteilung in der zu überwachenden Umgebung zu ermitteln, wobei diese Temperaturverteilung im Speicher der Steuer- und Erfassungseinheit visualisiert und/oder gespeichert wird.

2. Verfahren nach Anspruch 1, **dadurch gekennzeichnet, dass** der zusätzliche Wärmeerzeuger in Form von Punktheizelementen (5) und/oder des Linienheizelementes (8) mit dem vorgefertigten, mehrere Sensoren aufweisenden integrierten Kabel (K) verbunden ist, wobei bevorzugt der Wärmeerzeuger auf der Außenseite des Kabelrohres (1) angebracht ist.

3. Verfahren nach Anspruch 1, **dadurch gekennzeichnet, dass** der zusätzliche Wärmeerzeuger in Form von Punktheizelementen (5) und des Linienheizelements (8) in die zu überwachende Umgebung (2) in einem vorgegebenen Entfernung vom vorgefertigten, mehrere Sensoren aufweisenden Kabel (K) eingeführt wird.

4. Verfahren nach einem der Ansprüche 1 bis 3, **dadurch gekennzeichnet, dass** die Heizleistung und Heizdauer des Heizerzeugers durch die Steuer- und Erfassungseinheit (3) gesteuert werden und dass bei fehlendem Wasserdurchfluss in der zu überwachenden Umgebung (2) die Leistung des Wärmeerzeugers so eingestellt wird, dass eine messbare Temperaturerhöhung an den Temperatursensoren (4) des vorgefertigten, mehrere Sensoren aufweisenden integrierten Kabels (K) festzustellen ist.

5. Verfahren nach einem der Ansprüche 1 bis 4, **dadurch gekennzeichnet, dass** die Heizleistung und Heizdauer des Wärmeerzeugers null beträgt.

6. Verfahren nach einem der Ansprüche 1 bis 5, **dadurch gekennzeichnet, dass** die Entfernung zwischen den Temperatursensoren (4) der benachbarten Abschnitte des vorgefertigten, mehrere Sensoren aufweisenden integrierten Kabels (K) so gewählt ist, dass die Temperaturmessungen linear erfolgen können.

7. Verfahren nach Anspruch 6, **dadurch gekennzeichnet, dass** die Entfernung zwischen den Temperatursensoren (4) an benachbarten Abschnitten des mehrere Sensoren aufweisenden integrierten Kabels (K) kleiner als 2 m ist und bevorzugt 0,1 m bis 1 m beträgt.

8. Verfahren nach einem der Ansprüche 1 bis 7, **dadurch gekennzeichnet, dass** das vorgefertigte, mehrere Sensoren aufweisende integrierte Kabel (K) in einer horizontalen oder vertikalen Öffnung des zu überwachenden Umgebung (2) positioniert ist und dass die Temperatursensoren (4) der Abschnitte des Kabels (K) auf einer Tiefe von 0,1 m bis 15 m unter der Oberfläche der zu überwachenden Umgebung in den Bodenstiften angebracht sind und dass die Öffnungen der Stifte mit einem undurchlässigen Material, bevorzugt Bentonit gefüllt sind.

9. Verfahren zum Erkennen und Überwachen des Flüssigkeitsdurchflusses, insbesondere in Filtrationsprozessen, insbesondere für Leckagen in Konstruktionen/Boden, zur Verwendung nach dem Verfahren nach Ansprüchen 1 bis 8, **dadurch gekennzeichnet, dass** das das es über die im Kabelrohr (1) geschützte Versorgungsleitung (6), Datenleitung (7), Konstruktion aus gleichen Sektionen aufweist, wobei jede Sektion individuell adressierbar und kontrollierbar ist, wobei jede Sektion folgende Komponenten enthält: Wärmeerzeuger in Form von Punktheizelement (5), Temperatursensor (4) angeschlossen an A/D-Wandler, Verstärker und Speicher, wobei die Sektionen an die Versorgungsleitung und Datenleitung angeschlossen sind und das mehrere Sensoren aufweisende integrierte Kabel an seinem Ende parallele, serielle, USB oder andere passende Anschlüsse aufweist, wobei das vorgefertigte integrierte mehrere Sensoren aufweisende Kabel an die Versorgungsquelle (3a) sowie die Steuer- und Erfassungseinheit (3) angeschlossen ist, welche die Mittel zur Erhebung, Erfassung, Verarbeitung und Visualisierung der Messdaten enthält.

10. System nach Anspruch 9, **dadurch gekennzeichnet, dass** der zusätzliche Wärmeerzeuger in Form von Punktheizelementen (5) und/oder des Linienheizelementes (8) mit dem vorgefertigten, mehrere Sensoren aufweisenden integrierten Kabel (K) verbunden ist, wobei bevorzugt der Wärmeerzeuger auf der Außenseite des Kabelrohres (1) angebracht ist.

11. System nach Anspruch 9, **dadurch gekennzeichnet, dass** der zusätzliche Wärmeerzeuger in Form von Punktheizelementen (5) und/oder des Linienheizelementes (8) vom vorgefertigten, mehrere Sensoren aufweisenden integrierten Kabel (K) getrennt ist.

12. System nach Anspruch 10 oder 11 **dadurch gekennzeichnet, dass** der Wärmeerzeuger an die Versorgungsleitung (6) angeschlossen ist.

13. System nach einem der Ansprüche 9 bis 12, **dadurch gekennzeichnet, dass** das vorgefertigte, mehrere Sensoren aufweisende, integrierte Kabel (K) an die Steuer- und Erfassungseinheit (3) kabellos oder über ein Übertragung- und Versorgungskabel angeschlossen ist.

14. System nach Ansprüchen 9-13, bestehend aus dem vorgefertigtem, mehrere Sensoren aufweisenden integrierten Kabel (K), zur Verwendung nach dem Verfahren nach Ansprüchen 1-8, **dadurch gekennzeichnet, dass** das vorgefertigte, mehrere Sensoren aufweisende integrierte Kabel (K) folgenden Komponenten aufweist: im Kabelrohr (1) geschützte Versorgungsleitung (6), Datenleitung (7), Konstruktion bestehend aus gleichen Abschnitten, wobei jeder Abschnitt individuell adressierbar und kontrollierbar ist folgende Komponenten aufweist: Wärmeerzeuger in Form der Punktheizelements (5), Temperatursensor (4) angeschlossen an A/D-Wandler, Verstärker und Speicher, wobei die Abschnitte an die Versorgungsleitung und Datenleitung angeschlossen sind, die Temperatursensoren an die Versorgungsleitung und Datenleitung parallel angeschlossen sind, wobei das vorgefertigte, mehrere Sensoren aufweisende integrierte Kabel an seinem Ende einen parallelen, seriellen, USB oder anderen Anschluss aufweist.

15. Verwendung des Verfahrens nach Ansprüchen 1-8 und des Systems nach Ansprüchen 9-14 im Bauwesen, Hydrobau und/oder Geotechnologie.

## Revendications

1. Procédé de détection et de surveillance de l'écoulement du liquide, en particulier de l'écoulement du liquide dans les processus de filtration, en particulier de fuites dans les structures et / ou le sol, **caractérisé en ce qu'**un câble intégré multi-capteurs préfabriqué (K) composé d'une ligne d'alimentation (6) protégée dans un conduit de câble (1), une ligne de données (7), une structure constituée de sections répétitives ; dans lequel chaque section est adressée et contrôlée individuellement, où chaque section comprend : un générateur de chaleur sous la forme d'un élément chauffant ponctuel (5), un capteur de température (4) connecté au convertisseur A / D, à l'amplificateur et à la mémoire, et dans lequel des sections sont connectées à la ligne d'alimentation et à la ligne de données et le câble intégré multi-capteurs préfabriqué se termine par des connecteurs parallèles, série, USB ou autres, et où ledit câble est introduit dans l'environnement surveillé (2) et connecté à une source d'alimentation (3a) et à une unité de commande et d'enregistrement (3) comprenant des moyens pour acquérir, enregistrer, traiter et visualiser les données de mesure, la position spatiale de chaque capteur de température étant donc déterminée dans l'environnement surveillé, et le générateur de chaleur étant alimenté en courant commandé par l'unité de commande et d'enregistrement en fonction de l'algorithme sélectionné, puis la température de l'environnement surveillé en fonction de l'espace et du temps étant mesurée au moyen de capteurs de température et les données générées étant transmises à l'unité de commande et d'enregistrement, où ces données sont enregistrées et traitées pour obtenir la distribution de température spatiale et temporelle dans l'environnement surveillé, cette distribution étant visualisée et / ou stockée dans l'unité de mémoire de l'unité de commande et d'enregistrement.

2. Procédé selon la revendication 1, **caractérisé en ce qu'un** générateur de chaleur supplémentaire constitué d'un ensemble d'éléments chauffants ponctuels (5) et / ou d'un élément chauffant linéaire (8) est intégré au câble intégré multi-capteurs préfabriqué (K), de préférence le générateur de chaleur supplémentaire étant fixé à l'extérieur du conduit de câble (1).

3. Procédé selon la revendication 1, **caractérisé en ce qu'**un générateur de chaleur supplémentaire constitué d'un ensemble de radiateurs ponctuels (5) et / ou d'un radiateur linéaire (8) est introduit dans l'environnement surveillé (2) à une distance prédéfinie du câble intégré multi-capteurs préfabriqué (K).

4. Procédé selon l'une quelconque des revendications 1 à 3, **caractérisé en ce que** la puissance et le temps de chauffage du générateur de chaleur sont contrôlés par l'unité de commande et d'enregistrement (3), et **en ce qu'**en l'absence de débit d'eau dans l'environnement surveillé (2) la puissance du générateur de chaleur est réglée de manière à provoquer une augmentation mesurable de la température mesurée par les capteurs de température (4) compris dans le câble intégré multi-capteurs préfabriqué (K).

5. Procédé selon l'une quelconque des revendications 1 à 4, **caractérisé en ce que** la puissance et le temps de chauffage du générateur de chaleur sont égaux à zéro.

6. Procédé selon l'une des revendications 1 à 5, **caractérisé en ce que** la distance entre les capteurs de température (4) dans les tronçons adjacents du câble intégré multi-capteurs préfabriqué (K) est réglée de sorte à assurer la linéarité des mesures de température.

7. Procédé selon la revendication 6, **caractérisé en ce que** la distance entre les capteurs de température (4) dans les tronçons adjacents du câble intégré multi-capteurs préfabriqué (K) est fixée à moins de 2 m, de préférence cette distance étant comprise entre 0,1 m et 1 m.

8. Procédé selon l'une quelconque des revendications 1 à 7, **caractérisé en ce que** le câble intégré multi-capteurs préfabriqué (K) est placé dans un alésage horizontal, incliné ou vertical réalisé dans l'environnement surveillé (2), et **en ce que** les capteurs de température (4) faisant partie des tronçons de câble (K) sont situés à une profondeur de 0,1 à 15 m au-dessous de la surface de l'environnement surveillé dans des tiges creuses enfoncées dans le sol, et **en ce que** les trous dans les tiges creuses sont remplis d'un matériau imperméable, de préférence de la bentonite.

9. Système de détection et de surveillance de l'écoulement du liquide, en particulier de l'écoulement du liquide dans les processus de filtration, en particulier de fuites dans les structures et / ou le sol, à utiliser dans le procédé décrit dans les revendications de 1 à 8, **caractérisé en ce qu'**il est composé d'une ligne d'alimentation (6) protégée dans un conduit de câble (1), une ligne de données (7), une structure constituée de sections répétitives, dans laquelle chaque section est adressée et contrôlée individuellement, où chaque section comprend : un générateur de chaleur sous la forme d'un élément chauffant ponctuel (5), un capteur de température (4) connecté au convertisseur A / D, à l'amplificateur et à la mémoire et où lesdites sections sont connectées à la ligne d'alimentation et à la ligne de données et le câble intégré multi-capteurs préfabriqué se termine par des connecteurs parallèles, série, USB ou autres, et dans lequel ledit câble intégré multi-capteurs préfabriqué est connecté à une source d'alimentation (3a) et à une unité de commande et d'enregistrement (3) comprenant des moyens pour acquérir, enregistrer, traiter et visualiser les données de mesure.

10. Système selon la revendication 9, **caractérisé en ce qu'un** générateur de chaleur supplémentaire constitué d'un ensemble d'éléments chauffants ponctuels (5) et / ou d'un élément chauffant linéaire (8) est intégré au câble intégré multi-capteurs préfabriqué (K), de préférence le générateur de chaleur supplémentaire étant fixé à l'extérieur du conduit de câble (1).

11. Système selon la revendication 9, **caractérisé en ce qu'**un générateur de chaleur supplémentaire constitué d'un ensemble d'éléments chauffants ponctuels (5) et / ou d'un élément chauffant linéaire (8) est séparé du câble intégré multi-capteurs préfabriqué (K).

12. Système selon les revendications 10 ou 11, **caractérisé en ce que** le générateur de chaleur est connecté à la ligne d'alimentation (6).

13. Système selon l'une quelconque des revendications 9 à 12, **caractérisé en ce que** le câble intégré multi-capteurs préfabriqué (K) est connecté à l'unité de commande et d'enregistrement (3) sans fil ou via un câble de communication et d'alimentation.

14. Système selon les revendications 9 à 13, composé d'un câble intégré multi-capteurs préfabriqué, à utiliser selon le procédé décrit dans les revendications de 1 à 8, **caractérisé en ce que** ce câble intégré multi-capteurs préfabriqué (K) est composé d'une ligne d'alimentation (6) protégée dans un conduit de câble (1), une ligne de données (7), une structure constituée de tronçons répétitifs, dans lesquels chaque tronçon est adressé et contrôlé individuellement, et chaque tronçon comprend : un générateur de chaleur sous la forme d'un élément chauffant ponctuel (5), un capteur de température (4) connecté au convertisseur A / D, à l'amplificateur et à la mémoire et dans lequel les tronçons sont connectés à la ligne d'alimentation et à la ligne de données, les capteurs de température sont connectés en parallèle à la ligne d'alimentation et à la ligne de données, et **en ce que** le câble intégré multi-capteurs préfabriqué se termine par un connecteur parallèle, série, USB ou autre approprié.

15. Utilisation du procédé défini dans les revendications 1 à 8 et du système défini dans les revendications 9 à 14 dans la construction, l'hydro-ingénierie et / ou la géotechnologie.
